# EUROPEAN PATENT SPECIFICATION

(11) **EP 3 204 157 B1**
(45) Date of publication and mention of the grant of the patent: **03.07.2024**
(21) Application number: 15791806.1
(22) Date of filing: 06.10.2015
(51) Int. Cl.: B01J 37/02, B01J 29/70, B01J 29/72, B01J 29/76, B01J 29/78, B01J 35/00, B01J 37/00, C01B 39/48

(54) **MOLECULAR SIEVE CATALYST FOR TREATING EXHAUST GAS**
MOLEKULARSIEBKATALYSATOR ZUR BEHANDLUNG VON ABGASEN
CATALYSEUR À TAMIS MOLÉCULAIRE POUR LE TRAITEMENT DE GAZ D'ÉCHAPPEMENT

(30) Priority: 07.10.2014 US 201462060903 P
(43) Date of publication of application: 16.08.2017
(73) Proprietor: Johnson Matthey Public Limited Company, London EC4A 4AB (GB)
(72) Inventor: FEDEYKO, Joseph, Malvern, Pennsylvania 19355 (US); RIVAS-CARDONA, Alejandra, Plymouth Meeting, Pennsylvania 19462 (US); CHEN, Hai-Ying, Conshohocken, Pennsylvania 19428 (US)
(74) Representative: Johnson Matthey Plc
(86) International application number: PCT/US2015/054140
(87) International publication number: WO 2016/057456

(56) References cited:
- WO-A1-2014/160289
- WO-A1-2015/028805
- WO-A1-2015/110822
- WO-A1-2015/145113
- WO-A2-2011/084218
- DUSTIN W FICKEL ET AL: "The ammonia selective catalytic reduction activity of copper-exchanged small-pore zeolites", APPLIED CATALYSIS B: ENVIRONMENTAL, ELSEVIER, AMSTERDAM, NL, vol. 102, no. 3, 9 December 2010 (2010-12-09), pages 441-448, XP028139896, ISSN: 0926-3373, DOI: 10.1016/J.APCATB.2010.12.022 [retrieved on 2010-12-16]
- YASHODHAN BHAWE ET AL: "Effect of Cage Size on the Selective Conversion of Methanol to Light Olefins", ACS CATALYSIS, vol. 2, no. 12, 7 December 2012 (2012-12-07), pages 2490-2495, XP055240263, US ISSN: 2155-5435, DOI: 10.1021/cs300558x

## Description

### BACKGROUND

### Field of invention:

The present invention relates to catalysts and methods for treating combustion exhaust gas.

### Description of Related Art:

Combustion of hydrocarbon-based fuel in engines produces exhaust gas that contains, in large part, relatively benign nitrogen (N₂), water vapor (H₂O), and carbon dioxide (CO₂). But the exhaust gases also contain, in relatively small part, noxious and/or toxic substances, such as carbon monoxide (CO) from incomplete combustion, hydrocarbons (HC) from un-burnt fuel, nitrogen oxides (NOₓ) from excessive combustion temperatures, and particulate matter (mostly soot). To mitigate the environmental impact of flue and exhaust gas released into the atmosphere, it is desirable to eliminate or reduce the amount of the undesirable components, preferably by a process that, in turn, does not generate other noxious or toxic substances.

Typically, exhaust gases from lean burn gas engines have a net oxidizing effect due to the high proportion of oxygen that is provided to ensure adequate combustion of the hydrocarbon fuel. In such gases, one of the most burdensome components to remove is NOₓ, which includes nitric oxide (NO), nitrogen dioxide (NO₂), and nitrous oxide (N₂O). The reduction of NOₓ to N₂ is particularly problematic because the exhaust gas contains enough oxygen to favor oxidative reactions instead of reduction. Notwithstanding, NOₓ can be reduced by a process commonly known as Selective Catalytic Reduction (SCR). An SCR process involves the conversion of NOₓ, in the presence of a catalyst and with the aid of a reducing agent, such as ammonia, into elemental nitrogen (N₂) and water. In an SCR process, a gaseous reductant such as ammonia is added to an exhaust gas stream prior to contacting the exhaust gas with the SCR catalyst. The reductant is absorbed onto the catalyst and the NOₓ reduction reaction takes place as the gases pass through or over the catalyzed substrate. The chemical equation for stoichiometric SCR reactions using ammonia is:

4NO + 4NH₃ + O₂ → 4N₂ + 6H₂O

2NO₂ + 4NH₃ + O₂ → 3N₂ + 6H₂O

NO + NO₂ + 2NH₃ → 2N₂ + 3H₂O

Zeolites having an exchanged transition metal are known to be useful as SCR catalysts. Conventional small pore zeolites exchanged with copper are particularly useful in achieving high NOₓ conversion at low temperatures. The use of a zeolite having an AFX framework has been previously described. For instance, the scientific article DUSTIN W FICKEL ET AL: "The ammonia selective catalytic reduction activity of copper-exchanged small-pore zeolites",APPLIED CATALYSIS B: ENVIRONMENTAL, ELSEVIER, AMSTERDAM, NL, vol. 102, no. 3, 9 December 2010, pages 441-448 discloses copper-promoted zeolite SSZ-16 having SiO₂/Al₂O₃ of 9.

However, it was reported that this zeolite resulted in poor hydrothermal stability, particularly at temperatures above 350° C. Therefore, a need remains for improved SCR catalysts able to operate effectively as an SCR at temperatures between 350 °C and 550 °C (a typical exhaust temperature of a diesel engine). The present invention satisfies this need amongst others.

### SUMMARY OF THE INVENTION

Applicants have found that a molecular sieve having an AFX framework and a high SAR is useful in treating NOₓ via a selective catalytic reduction process. For example, AFX zeolites having a SAR of at least 15 demonstrated superior hydrothermal stability and excellent SCR performance, particularly compared to known AFX zeolite catalysts. In addition, the AFX zeolites of the present invention yielded comparatively less N₂O by-product relative to known AFX zeolites.

Accordingly, in one aspect provided is a catalyst for treating exhaust gas as defined in appended claim 1.

In another aspect of the invention, provided is a catalyst washcoat as defined in appended claim 9.

In another aspect of the invention, provided is an exhaust gas treatment system as defined in appended claim 10.

In yet another aspect of the invention, provided is a method for treating an exhaust gas as defined in appended claim 13.

### BRIEF DESCRIPTION OF THE FIGURES

Figure 1 is a graph showing the comparative NOₓ conversion performance of the present invention; and
Figure 2 is a graph showing the comparative N₂O byproduct generation of the present invention.

### DETAILED DESCRIPTION OF PREFERRED EMBODIMENTS OF THE INVENTION

Provided is a catalyst, exhaust gas treatment system, and method for improving environmental air quality, and in particular for treating exhaust gas emissions generated by power plants, gas turbines, lean burn internal combustion engines, and the like. Exhaust gas emissions are improved, at least in part, by reducing NOₓ concentrations over a broad operational temperature range. The conversion of NOₓ is accomplished by contacting the exhaust gas with a metal loaded zeolite catalyst having an AFX framework.

Preferred catalysts comprise a molecular sieve having AFX framework as the predominant crystalline phase. As used herein, the term "AFX" refers to an AFX framework type as recognized by the International Zeolite Association (IZA) Structure Commission. The majority of the aluminosilicate zeolite structure is constructed of alumina and silica, but may include framework metals other than aluminum (i.e., metal-substituted zeolites). As used herein, the term "metal substituted" with respect to a zeolite means a zeolite framework having one or more aluminum or silicon framework atoms replaced by a substituting metal. In contrast, the term "metal exchanged" means a zeolite having extra-framework or free metal ions associated with the framework structure, but not form part of the framework itself. Examples of metal-substituted AFX frameworks include those that comprise framework iron and/or copper atoms. Any aluminosilicate isotype of AFX is suitable for the present invention.

Preferably, the primary crystalline phase of the molecular sieve is AFX, although other crystalline phases may also be present. The primary crystalline phase comprises at least about 90 weight percent AFX, preferably at least about 95 weight percent AFX, and even more preferably at least about 98 or at least about 99 weight percent AFX. In certain embodiments, the AFX molecular sieve is substantially free of other crystalline phases and in certain embodiments it is not an intergrowth of two or more framework types. In other embodiments, the zeolite crystal is an intergrowth of AFX and at least one other framework phase. By "substantially free" with respect to other crystalline phases, it is meant that the molecular sieve contains at least 99 weight percent AFX.

The zeolite has a mole silica-to-alumina ratio (SAR) of to 50, about 20 to 50, about 20 to about 30, or about 20 to about 26. The silica-to-alumina ratio of zeolites may be determined by conventional analysis. This ratio is meant to represent, as closely as possible, the ratio in the rigid atomic framework of the zeolite crystal and to exclude silicon or aluminum in the binder or in cationic or other form within the channels. Since it may be difficult to directly measure the silica to alumina ratio of zeolite after it has been combined with a binder material, particularly an alumina binder, these silica-to-alumina ratios are expressed in terms of the SAR of the zeolite *per se*, i.e., prior to the combination of the zeolite with the other catalyst components.

In addition to the AFX zeolite, the catalyst composition comprises at least one promoter metal disposed on and/or within the zeolite material as extra-framework metals. As used herein, an "extra-framework metal" is one that resides within the molecular sieve and/or on at least a portion of the molecular sieve surface, preferably as an ionic species, does not include aluminum, and does not include atoms constituting the framework of the molecular sieve. Preferably, the presence of the promoter metal facilitates the treatment of exhaust gases, such as exhaust gas from a diesel engine, including processes such as NOₓ reduction, NH₃ oxidation, and NO, storage copper.

The promoter metal

In certain embodiments, the promoter metal (i.e. Cu) is present in the zeolite material at a concentration of 0.1 to about 10 weight percent (wt%) based on the total weight of the zeolite, for example from 0.5 wt% to 5 wt%, from 0.5 to about 1 wt%, from about 1 to 5 wt%, about 2.5 wt% to about 3.5 wt%. For copper, the concentration in the zeolite material is preferably about 1 to 5 weight percent, more preferably about 2.5 to about 3.5 weight percent.

In certain embodiments, the promoter metal, i.e. copper, is present in an amount from about 80 to about 120 g/ft³ of zeolite or washcoat loading, including for example about 85 to about 95 g/ft³, or about 90 to about 95 g/ft³.

In certain embodiments, the promoter metal (i.e. Cu) is present in an amount relative to the amount of aluminum in the zeolite, namely the framework aluminum. As used herein, the promoter metal:aluminum (M:AI) ratio is based on the relative molar amount of promoter metal (i.e. Cu) to molar framework Al in the corresponding zeolite. In certain embodiments, the catalyst material has a M:AI ratio of about 0.1 to about 1.0, preferably about 0.2 to about 0.5. An M:AI ratio of about 0.2 to about 0.5 is particularly useful where M is copper, and more particularly where M is copper and the SAR of the zeolite is about 20 - 25.

Preferably, incorporation of Cu occurs during synthesis or after, for example, by ion exchange or impregnation. In one example, a metal-exchanged zeolite is synthesized within an ionic copper mixture. The metal-exchanged zeolite may then be washed, dried, and calcined.

Generally, ion exchange of the catalytic metal cation into or on the molecular sieve may be carried out at room temperature or at a temperature up to about 80° C over a period of about 1 to 24 hours at a pH of about 7. The resulting catalytic molecular sieve material is preferably dried at about 100 to 120 °C overnight and calcined at a temperature of at least about 500 °C.

In certain embodiments, the catalyst composition comprises the combination of copper and at least one alkali or alkaline earth metal, wherein the copper and alkali or alkaline earth metal(s) are disposed on or within the zeolite material. The alkali or alkaline earth metal can be selected from sodium, potassium, rubidium, cesium, magnesium, calcium, strontium, barium, or some combination thereof. As used here, the phrase "alkali or alkaline earth metal" does not mean the alkali metals and alkaline earth metals are used in the alternative, but instead that one or more alkali metals can be used alone or in combination with one or more alkaline earth metals and that one or more alkaline earth metals can be used alone or in combination with one or more alkali metals. In certain embodiments, alkali metals are preferred. In certain embodiments, alkaline earth metals are preferred. Preferred alkali or alkaline earth metals include calcium, potassium, and combinations thereof. In certain embodiments, the catalyst composition is essentially free of magnesium and/or barium. In certain embodiments, the catalyst is essentially free of any alkali or alkaline earth metal except calcium and potassium. In certain embodiments, the catalyst is essentially free of any alkali or alkaline earth metal except calcium. And in certain other embodiments, the catalyst is essentially free of any alkali or alkaline earth metal except potassium. As used herein, the term "essentially free" means that the material does not have an appreciable amount of the particular metal. That is, the particular metal is not present in amount that would affect the basic physical and/or chemical properties of the material, particularly with respect to the material's capacity to selectively reduce or store NOₓ.

In certain embodiments, the zeolite material has a post-synthesis alkali content of less than 3 weight percent, more preferably less than 1 weight percent, and even more preferably less than 0.1 weight percent. Here, post-synthesis alkali content refers to the amount of alkali metal occurring in the zeolite as a result of synthesis (i.e., alkali derived from the synthesis starting materials) and does not include alkali metal added after synthesis. In certain embodiments, alkali metal can be added after synthesis to work in combination with the promoter metal.

In certain embodiments, the alkali and/or alkaline earth metal (collectively A_{M}) is present in the zeolite material in an amount relative to the amount of promoter metal (M) (i.e. Cu)

in the zeolite. Preferably, the M and A_{M} are present, respectively, in a molar ratio of about 15:1 to about 1:1, for example about 10:1 to about 2:1, about 10:1 to about 3:1, or about 6:1 to about 4:1, particularly were M is copper and A_{M} is calcium. In certain embodiments which include an alkali and/or alkaline earth metal such as calcium, the amount of copper present is less than 2.5 weight percent, for example less than 2 weight percent or less than 1 weight percent, based on the weight of the zeolite.

In the present invention, the relative cumulative amount of promoter metal (M) (i.e. Cu) and alkali and/or alkaline earth metal (A_{M}) is present in the zeolite material in an amount relative to the amount of aluminum in the zeolite, namely the framework aluminum. As used herein, the (M+A_{M}):Al ratio is based on the relative molar amounts of M + A_{M} to molar framework Al in the corresponding zeolite. The catalyst material has a (M+A_{M}):Al ratio of not more than 0.6. In certain embodiments, the (M+A_{M}):Al ratio is not more than 0.5, for example about 0.05 to about 0.5, about 0.1 to about 0.4, or about 0.1 to about 0.2.

The promoter metal and alkali /alkaline earth metal can be added to the molecular sieve via any known technique such as ion exchange, impregnation, isomorphous substitution, etc. The promoter metal and the alkali or alkaline earth metal can be added to the zeolite material in any order (e.g., the metal can be exchanged before, after, or concurrently with the alkali or alkaline earth metal), but preferably the alkali or alkaline earth metal is added prior to or concurrently with the promoter metal, particularly when the alkali earth metal is calcium and the promoter metal is copper.

In certain embodiments, the metal promoted zeolite catalysts of the present invention also contain a relatively large amount of cerium (Ce). In certain embodiments, the cerium concentration in the catalyst material is present in a concentration of at least about 1 weight percent, based on the total weight of the zeolite. Examples of preferred concentrations include at least about 2.5 weight percent, at least about 5 weight percent, at least about 8 weight percent, at least about 10 weight percent, about 1.35 to about 13.5 weight percent, about 2.7 to about 13.5 weight percent, about 2.7 to about 8.1 weight percent, about 2 to about 4 weight percent, about 2 to about 9.5 weight percent, and about 5 to about 9.5 weight percent, based on the total weight of the zeolite. In certain embodiments, the cerium concentration in the catalyst material is about 50 to about 550 g/ft³. Other ranges of Ce include: above 100 g/ft³, above 200 g/ft³, above 300 g/ft³, above 400 g/ft³, above 500 g/ft³, from about 75 to about 350 g/ft³, from about 100 to about 300 g/ft³, and from about 100 to about 250 g/ft³.

In certain embodiments, the concentration of Ce exceeds the theoretical maximum amount available for exchange on the metal-promoted zeolite. Accordingly, in some embodiments, Ce is present in more than one form, such as Ce ions, monomeric ceria, oligomeric ceria, and combinations thereof, provided that said oligomeric ceria has a mean crystal size of less than 5 µm, for example less than 1 µm, about 10 nm to about 1 µm), about 100 nm to about 1 µm, about 500 nm to about 1 µm, about 10 to about 500 nm, about 100 to about 500 nm, and about 10 to about 100 nm. As used herein, the term *"*monomeric ceria*"* means CeO₂ as individual molecules or moieties residing freely on and/or in the zeolite or weakly bonded to the zeolite. As used herein, the term *"*oligomeric ceria*"* means nanocrystalline CeO₂ residing freely on and/or in the zeolite or weakly bonded to the zeolite.

Catalysts of the present invention are applicable for heterogeneous catalytic reaction systems (i.e., solid catalyst in contact with a gas reactant). To improve contact surface area, mechanical stability, and/or fluid flow characteristics, the catalysts can be disposed on and/or within a substrate, preferably a porous substrate. In certain embodiments, a washcoat containing the catalyst is applied to an inert substrate, such as corrugated metal plate or a honeycomb cordierite brick. Alternatively, the catalyst is kneaded along with other components such as fillers, binders, and reinforcing agents, into an extrudable paste which is then extruded through a die to form a honeycomb brick. Accordingly, in certain embodiments provided is a catalyst article comprising a metal-promoted AFX zeolite catalyst described herein coated on and/or incorporated into a substrate.

Certain aspects of the invention provide a catalytic washcoat. The washcoat comprising the AFX catalyst described herein is preferably a solution, suspension, or slurry. Suitable coatings include surface coatings, coatings that penetrate a portion of the substrate, coatings that permeate the substrate, or some combination thereof.

In certain embodiments, the invention is a catalyst composition comprising AFX aluminosilicate molecular sieve crystals having a mean crystal size (i.e., of individual crystals including twinned crystals) of greater than 0.5 µm, preferably between 0.1 and 15 µm, such as about 0.5 to about 5 µm, about 0.7 to about 1.5 µm, about 1 to about 5 µm, or about 1 µm to about 10 µm, particularly for catalysts which are free or substantially free of halogens, such as fluorine. Crystal size is the length of longest diagonal of the three dimensional crystal. Direct measurement of the crystal size can be performed using microscopy methods, such as SEM and TEM. For example, measurement by SEM involves examining the morphology of materials at high magnifications (typically 1000× to 10,000×). The SEM method can be performed by distributing a representative portion of the zeolite powder on a suitable mount such that individual particles are reasonably evenly spread out across the field of view at 1000× to 10,000× magnification. From this population, a statistically significant sample of random individual crystals (e.g., 50 - 200) are examined and the longest diagonal of the individual crystals are measured and recorded. (Particles that are clearly large polycrystalline aggregates should not be included the measurements.) Based on these measurements, the arithmetic mean of the sample crystal sizes is calculated.

In addition to the mean crystal size, catalyst compositions preferably have a majority of the crystal sizes are greater than about 0.5 µm, preferably between about 0.5 and about 15 µm, such as about 0.5 to about 5 µm, about 0.7 to about 5 µm, about 1 to about 5 µm, about 1.5 to about 5.0 µm, about 1.5 to about 4.0 µm about 2 to about 5 µm, or about 1 µm to about 10 µm. Preferably, the first and third quartile of the sample of crystals sizes is greater than about 0.5 µm, preferably between about 0.5 and about 15 µm, such as about 0.5 to about 5 µm about 0.7 to about 5 µm, about 1 to about 5 µm, about 1.5 to about 5.0 µm, about 1.5 to about 4.0 µm, about 2 to about 5 µm, or about 1 µm to about 10 µm.

In certain embodiments, the AFX crystals are milled to adjust the composition's particle size. In other embodiments, the AFX crystals are unmilled.

In certain aspects, the catalyst is a copper promoted AFX zeolite having an SAR of 15 to about 25, such as 15 to about 17, and having a mean crystal size of 0.1 to about 10 µm, such as about 0.5 to 5 µm, or 0.5 to 1.5 µm, particularly where such catalyst are free or substantially free of halogens., such as fluorine.

High SAR AFX zeolites of the present invention can be synthesized using an organic template, such as 1,3-Bis(1-adamantyl) imidazolium hydroxide. Such catalysts demonstrate high hydrothermal durability and also yield high NOₓ conversions when used as SCR catalysts. In certain embodiments, the AFX zeolite is not SSZ-16 and the catalyst composition is substantially free of SSZ-16.

In certain aspects, the invention is an SCR catalyst comprising two or more catalytic materials arranged in separate zones or formulated as blends. For example, in certain aspects, the SCR catalyst comprises a first zone comprising a copper promoted AFX zeolite as defined herein, and a second zone containing a second catalyst such an oxidation catalyst, a NOₓ absorber or NOₓ trapping catalyst, and/or an SCR catalyst. The first and second zones may be on a single substrate, such as wall-flow filter or a flow-through honeycomb, or on separate substrates, but are preferably disposed on or within a single unit of substrate.

Examples of a second catalyst include molecular sieves, such as aluminosilicates, silicoaluminophosphates, and ferrosilicates including small pore molecular sieves, medium pore molecular sieves, and large pore molecular sieves. For certain applications, small pore zeolites and SAPOs are preferred. An example of a small pore molecular sieve is CHA. Another example of a small pore molecular sieve is AEI. Other small pore molecular sieves include DDR, LEV, ERI, RHO, RTH, SFW, AFT, and KFI. Other useful molecular sieves include BEA, MFI, MOR, and FER. The molecular sieve of the second catalyst cab be in the H+ form, and/or can be exchanged with a transition metal, such as Cu, Fe, Ni, Co, and Mn, a noble metal such as Au, Ag, Pt, Pd, and Ru, or some combination thereof. Particularly useful metals include Fe and Cu. Other examples of a second catalyst include vanadium catalysts, such as V₂O₅ supported on silica, titania, or alumina, and optionally in combination with other metals such as tungsten and/or molybdenum.

The first zone can be upstream or downstream of the second zone with respect to flow of exhaust gas. In certain examples, the second catalyst is a second SCR catalyst or oxidation catalyst disposed downstream of the AFX catalyst. The upstream zone and downstream zone can correspond to the front end and rear end, respectively, of a flow-through honeycomb substrate, or can correspond to the inlet and outlet sides, respectively, of a wall-flow filter. The two zones can partially or fully overlap each other. For partial overlap, the overlapping section will create a third, intermediate zone. The two zones may be adjacent to one another, with little or no gap between them (i.e., less than 0.2 inches). The first and second catalysts may be blended together and washcoated as a single catalyst layer or extruded as a homogeneous honeycomb substrate.

In certain aspects, the catalyst further comprises a third catalyst material which can also be an oxidation catalyst, a NOₓ absorber or NOₓ trapping catalyst, and/or an SCR catalyst. The AFX catalyst, second catalyst, and/or third catalyst can be combined as a blend, arranged in zones, and/or arranged in layers on a substrate.

A washcoat containing the AFX catalyst can include non-catalytic components, such as fillers, binders, stabilizers, rheology modifiers, and other additives, including one or more of alumina, silica, non-zeolite silica alumina, titania, zirconia, ceria. In certain embodiments, the catalyst composition may comprise pore-forming agents such as graphite, cellulose, starch, polyacrylate, and polyethylene, and the like. These additional components do not necessarily catalyze the desired reaction, but instead improve the catalytic material's effectiveness, for example, by increasing its operating temperature range, increasing contact surface area of the catalyst, increasing adherence of the catalyst to a substrate, etc. In preferred embodiments, the washcoat loading is >0.3 g/in³, such as >1.2 g/in³, >1.5 g/in³, >1.7 g/in³ or >2.00 g/in³, and preferably < 3.5 g/in³, such as < 3.0 g/in³. In certain embodiments, the washcoat is applied to a substrate in a loading of about 0.8 to 1.0 g/in³, 1.0 to 1.5 g/in³, or 1.5 to 3.0 g/in3.

Two of the most common substrate designs are plate and honeycomb. Preferred substrates, particularly for mobile applications, include flow-through monoliths having a so-called honeycomb geometry that comprise multiple adjacent, parallel channels that are open on both ends and generally extend from the inlet face to the outlet face of the substrate and result in a high-surface area-to-volume ratio. For certain applications, the honeycomb flow-through monolith preferably has a high cell density, for example about 600 to 1000 cells per square inch, and/or an average internal wall thickness of about 0.18 - 0.35 mm, preferably about 0.20 - 0.25 mm. For certain other applications, the honeycomb flow-through monolith preferably has a low cell density of about 150 - 750 cells per square inch, more preferably about 200 - 600 cells per square inch. Preferably, the honeycomb monoliths are porous. In addition to cordierite, silicon carbide, silicon nitride, ceramic, and metal, other materials that can be used for the substrate include aluminum nitride, silicon nitride, aluminum titanate, α-alumina, mullite, e.g., acicular mullite, pollucite, a thermet such as Al₂OsZFe, Al₂O₃/Ni or B₄CZFe, or composites comprising segments of any two or more thereof. Preferred materials include cordierite, silicon carbide, and alumina titanate.

Plate-type catalysts have lower pressure drops and are less susceptible to plugging and fouling than the honeycomb types, which is advantageous in high efficiency stationary applications, but plate configurations can be much larger and more expensive. A Honeycomb configuration is typically smaller than a plate type, which is an advantage in mobile applications, but has higher pressure drops and plug more easily. In certain embodiments the plate substrate is constructed of metal, preferably corrugated metal.

Disclosed herein is a catalyst article made by a process described herein. In a particular embodiment, the catalyst article is produced by a process that includes the steps of applying the copper-promoted AFX zeolite composition, preferably as a washcoat, to a substrate as a layer either before or after at least one additional layer of another composition, such as a binder or another catalyst for treating exhaust gas, has been applied to the substrate. The one or more layers on the substrate, including the copper-promoted AFX catalyst layer, are arranged in consecutive layers. As used herein, the term "consecutive" with respect to catalyst layers on a substrate means that each layer is contact with its adjacent layer(s) and that the catalyst layers as a whole are arranged one on top of another on the substrate. Each of the consecutive layers can fully or partially overlap their respective adjacent layer.

In certain embodiments, the copper-promoted AFX catalyst is disposed on the substrate as a first layer and another composition, such as an oxidation catalyst, reduction catalyst, scavenging component, or NOₓ storage component, is disposed on the substrate as a second layer. In other embodiments, the metal--promoted AFX catalyst is disposed on the substrate as a second layer and another composition, such as such as an oxidation catalyst, reduction catalyst, scavenging component, or NOₓ storage component, is disposed on the substrate as a first layer. As used herein the terms "first layer" and *"*second layer*"* are used to describe the relative positions of catalyst layers in the catalyst article with respect to the normal direction of exhaust gas flow-through, past, and/or over the catalyst article. Under normal exhaust gas flow conditions, exhaust gas contacts the first layer prior to contacting the second layer. In certain embodiments, the second layer is applied to an inert substrate as a bottom layer and the first layer is top layer that is applied over the second layer as a consecutive series of sub-layers. In such embodiments, the exhaust gas penetrates (and hence contacts) the first layer, before contacting the second layer, and subsequently returns through the first layer to exit the catalyst component. In other embodiments, the first layer is a first zone disposed on an upstream portion of the substrate and the second layer is disposed on the substrate as a second zone, wherein the second zone is downstream of the first.

In another embodiment, the catalyst article is produced by a process that includes the steps of applying the copper-promoted AFX zeolite catalyst composition, preferably as a washcoat, to a substrate as a first zone, and subsequently applying at least one additional composition for treating an exhaust gas to the substrate as a second zone, wherein at least a portion of the first zone is downstream of the second zone. Alternatively, the copper-promoted AFX zeolite catalyst composition can be applied to the substrate in a second zone that is downstream of a first zone containing the additional composition. Examples of additional compositions include oxidation catalysts, reduction catalysts, scavenging components (e.g., for sulfur, water, etc.), or NOₓ storage components.

To reduce the amount of space required for an exhaust system, individual exhaust components in certain embodiments are designed to perform more than one function. For example, applying an SCR catalyst to a wall-flow filter substrate instead of a flow-through substrate serves to reduce the overall size of an exhaust treatment system by allowing one substrate to serve two functions, namely catalytically reducing NOₓ concentration in the exhaust gas and mechanically removing soot from the exhaust gas. Accordingly, in certain embodiments, the substrate is a honeycomb wall-flow filter or partial filter. Wall-flow filters are similar to flow-through honeycomb substrates in that they contain a plurality of adjacent, parallel channels. However, the channels of flow-through honeycomb substrates are open at both ends, whereas the channels of wall-flow substrates have one end capped, wherein the capping occurs on opposite ends of adjacent channels in an alternating pattern. Capping alternating ends of channels prevents the gas entering the inlet face of the substrate from flowing straight through the channel and existing. Instead, the exhaust gas enters the front of the substrate and travels into about half of the channels where it is forced through the channel walls prior to entering the second half of the channels and exiting the back face of the substrate

The substrate wall has a porosity and pore size that is gas permeable, but traps a major portion of the particulate matter, such as soot, from the gas as the gas passes through the wall. Preferred wall-flow substrates are high efficiency filters. Wall flow filters for use with the present invention preferably have an efficiency of least 70%, at least about 75%, at least about 80%, or at least about 90%. In certain embodiments, the efficiency will be from about 75 to about 99%, about 75 to about 90%, about 80 to about 90%, or about 85 to about 95%. Here, efficiency is relative to soot and other similarly sized particles and to particulate concentrations typically found in conventional diesel exhaust gas. For example, particulates in diesel exhaust can range in size from 0.05 microns to 2.5 microns. Thus, the efficiency can be based on this range or a sub-range, such as 0.1 to 0.25 microns, 0.25 to 1.25 microns, or 1.25 to 2.5 microns.

Porosity is a measure of the percentage of void space in a porous substrate and is related to backpressure in an exhaust system: generally, the lower the porosity, the higher the backpressure. Preferably, the porous substrate has a porosity of about 30 to about 80%, for example about 40 to about 75%, about 40 to about 65%, or from about 50 to about 60%.

The pore interconnectivity, measured as a percentage of the substrate's total void volume, is the degree to which pores, void, and/or channels, are joined to form continuous paths through a porous substrate, i.e., from the inlet face to the outlet face. In contrast to pore interconnectivity is the sum of closed pore volume and the volume of pores that have a conduit to only one of the surfaces of the substrate. Preferably, the porous substrate has a pore interconnectivity volume of at least about 30%, more preferably at least about 40%.

The mean pore size of the porous substrate is also important for filtration. Mean pore size can be determined by any acceptable means, including by mercury porosimetry. The mean pore size of the porous substrate should be of a high enough value to promote low backpressure, while providing an adequate efficiency by either the substrate per se, by promotion of a soot cake layer on the surface of the substrate, or combination of both. Preferred porous substrates have a mean pore size of about 10 to about 40 µm, for example about 20 to about 30 µm, about 10 to about 25 µm, about 10 to about 20 µm, about 20 to about 25 µm, about 10 to about 15 µm, and about 15 to about 20 µm.

In general, the production of an extruded solid body containing the copper-promoted AFX catalyst involves blending the AFX zeolite and the promoter metal (either separately or together as a copper-exchanged zeolite), a binder, an optional organic viscosity-enhancing compound into an homogeneous paste which is then added to a binder/matrix component or a precursor thereof and optionally one or more of stabilized ceria, and inorganic fibers. The blend is compacted in a mixing or kneading apparatus or an extruder. The mixtures have organic additives such as binders, pore formers, plasticizers, surfactants, lubricants, dispersants as processing aids to enhance wetting and therefore produce a uniform batch. The resulting plastic material is then molded, in particular using an extrusion press or an extruder including an extrusion die, and the resulting moldings are dried and calcined. The organic additives are "burnt out" during calcinations of the extruded solid body. The copper-promoted AFX zeolite catalyst may also be washcoated or otherwise applied to the extruded solid body as one or more sub-layers that reside on the surface or penetrate wholly or partly into the extruded solid body. Alternatively, the copper-promoted AFX zeolite can be added to the paste prior to extrusion.

Extruded solid bodies containing copper-promoted AFX zeolites according to the present invention generally comprise a unitary structure in the form of a honeycomb having uniform-sized and parallel channels extending from a first end to a second end thereof. Channel walls defining the channels are porous. Typically, an external "skin" surrounds a plurality of the channels of the extruded solid body. The extruded solid body can be formed from any desired cross section, such as circular, square or oval. Individual channels in the plurality of channels can be square, triangular, hexagonal, circular etc. Channels at a first, upstream end can be blocked, e.g. with a suitable ceramic cement, and channels not blocked at the first, upstream end can also be blocked at a second, downstream end to form a wall-flow filter. Typically, the arrangement of the blocked channels at the first, upstream end resembles a checker-board with a similar arrangement of blocked and open downstream channel ends.

The binder/matrix component is preferably selected from the group consisting of cordierite, nitrides, carbides, borides, intermetallics, lithium aluminosilicate, a spinel, an optionally doped alumina, a silica source, titania, zirconia, titania-zirconia, zircon and mixtures of any two or more thereof. The paste can optionally contain reinforcing inorganic fibers selected from the group consisting of carbon fibers, glass fibers, metal fibers, boron fibers, alumina fibers, silica fibers, silica-alumina fibers, silicon carbide fibers, potassium titanate fibers, aluminum borate, fibers and ceramic fibers.

The alumina binder/matrix component is preferably gamma alumina, but can be any other transition alumina, i.e., alpha alumina, beta alumina, chi alumina, eta alumina, rho alumina, kappa alumina, theta alumina, delta alumina, lanthanum beta alumina and mixtures of any two or more such transition aluminas. It is preferred that the alumina is doped with at least one non-aluminum element to increase the thermal stability of the alumina. Suitable alumina dopants include silicon, zirconium, barium, lanthanides and mixtures of any two or more thereof. Suitable lanthanide dopants include La, Ce, Nd, Pr, Gd and mixtures of any two or more thereof.

Sources of silica can include a silica sol, quartz, fused or amorphous silica, sodium silicate, an amorphous aluminosilicate, an alkoxysilane, a silicone resin binder such as methylphenyl silicone resin, a clay, talc or a mixture of any two or more thereof. Of this list, the silica can be SiO₂ as such, feldspar, mullite, silica-alumina, silica-magnesia, silica -zirconia, silica-thoria, silica-berylia, silica-titania, ternary silica-alumina-zirconia, ternary silica-alumina-magnesia, ternary-silica-magnesia-zirconia, ternary silica-alumina-thoria and mixtures of any two or more thereof.

Preferably, the copper-promoted AFX zeolite is dispersed throughout, and preferably evenly throughout, the entire extruded catalyst body.

Where any of the above extruded solid bodies are made into a wall-flow filter, the porosity of the wall-flow filter can be from 30-80%, such as from 40-70%. Porosity and pore volume and pore radius can be measured e.g. using mercury intrusion porosimetry

The copper-promoted AFX catalyst described herein can promote the reaction of a reductant, preferably ammonia, with nitrogen oxides to selectively form elemental nitrogen (N₂) and water (H₂O). Thus, in one embodiment, the catalyst can be formulated to favor the reduction of nitrogen oxides with a reductant (i.e., an SCR catalyst). Examples of such reductants include hydrocarbons (e.g., C3 - C6 hydrocarbons) and nitrogenous reductants such as ammonia and ammonia hydrazine or any suitable ammonia precursor, such as urea ((NH₂)₂CO), ammonium carbonate, ammonium carbamate, ammonium hydrogen carbonate or ammonium formate.

The copper-promoted AFX catalyst described herein can also promote the oxidation of ammonia. Thus, in another embodiment, the catalyst can be formulated to favor the oxidation of ammonia with oxygen, particularly a concentrations of ammonia typically encountered downstream of an SCR catalyst (e.g., ammonia oxidation (AMOX) catalyst, such as an ammonia slip catalyst (ASC)). In certain embodiments, the metal-promoted AFX zeolite catalyst is disposed as a top layer over an oxidative under-layer, wherein the under-layer comprises a platinum group metal (PGM) catalyst or a non-PGM catalyst. Preferably, the catalyst component in the underlayer is disposed on a high surface area support, including but not limited to alumina.

In yet another embodiment, an SCR and AMOX operations are performed in series, wherein both processes utilize a catalyst comprising the copper-promoted AFX zeolite described herein, and wherein the SCR process occurs upstream of the AMOX process. For example, an SCR formulation of the catalyst can be disposed on the inlet side of a filter and an AMOX formulation of the catalyst can be disposed on the outlet side of the filter.

Accordingly, provided is a method for the reduction of NOₓ compounds or oxidation of NH₃ in a gas, which comprises contacting the gas with a catalyst composition described herein for the catalytic reduction of NOₓ compounds for a time sufficient to reduce the level of NOₓ compounds and/or NH₃ in the gas. In certain embodiments, provided is a catalyst article having an ammonia slip catalyst disposed downstream of a selective catalytic reduction (SCR) catalyst. In such embodiments, the ammonia slip catalyst oxidizes at least a portion of any nitrogenous reductant that is not consumed by the selective catalytic reduction process. For example, in certain embodiments, the ammonia slip catalyst is disposed on the outlet side of a wall flow filter and an SCR catalyst is disposed on the upstream side of a filter. In certain other embodiments, the ammonia slip catalyst is disposed on the downstream end of a flow-through substrate and an SCR catalyst is disposed on the upstream end of the flow-through substrate. In other embodiments, the ammonia slip catalyst and SCR catalyst are disposed on separate bricks within the exhaust system. These separate bricks can be adjacent to, and in contact with, each other or separated by a specific distance, provided that they are in fluid communication with each other and provided that the SCR catalyst brick is disposed upstream of the ammonia slip catalyst brick.

In certain embodiments, the SCR and/or AMOX process is performed at a temperature of at least 100 °C. In another embodiment, the process(es) occur at a temperature from about 150 °C to about 750 °C. In a particular embodiment, the temperature range is from about 175 to about 550 °C. In another embodiment, the temperature range is from 175 to 400 °C. In yet another embodiment, the temperature range is 450 to 900 °C, preferably 500 to 750 °C, 500 to 650 °C, 450 to 550 °C, or 650 to 850 °C. Embodiments utilizing temperatures greater than 450 °C are particularly useful for treating exhaust gases from a heavy and light duty diesel engine that is equipped with an exhaust system comprising (optionally catalyzed) diesel particulate filters which are regenerated actively, e.g. by injecting hydrocarbon into the exhaust system upstream of the filter, wherein the zeolite catalyst for use in the present invention is located downstream of the filter

Provided is a method for the reduction of NOₓ compounds and/or oxidation of NH₃ in a gas, which comprises contacting the gas with a catalyst described herein for a time sufficient to reduce the level of NOₓ compounds in the gas. Methods of the present invention may comprise one or more of the following steps: (a) accumulating and/or combusting soot that is in contact with the inlet of a catalytic filter; (b) introducing a nitrogenous reducing agent into the exhaust gas stream prior to contacting the catalytic filter, preferably with no intervening catalytic steps involving the treatment of NOₓ and the reductant; (c) generating NH₃ over a NOₓ adsorber catalyst or lean NOₓ trap, and preferably using such NH₃ as a reductant in a downstream SCR reaction; (d) contacting the exhaust gas stream with a DOC to oxidize hydrocarbon based soluble organic fraction (SOF) and/or carbon monoxide into CO₂, and/or oxidize NO into NO₂, which in turn, may be used to oxidize particulate matter in particulate filter; and/or reduce the particulate matter (PM) in the exhaust gas; (e) contacting the exhaust gas with one or more flow-through SCR catalyst device(s) in the presence of a reducing agent to reduce the NOₓ concentration in the exhaust gas; and (f) contacting the exhaust gas with an ammonia slip catalyst, preferably downstream of the SCR catalyst to oxidize most, if not all, of the ammonia prior to emitting the exhaust gas into the atmosphere or passing the exhaust gas through a recirculation loop prior to exhaust gas entering/re-entering the engine.

In another embodiment, all or at least a portion of the nitrogen-based reductant, particularly NH₃, for consumption in the SCR process can be supplied by a NOₓ adsorber catalyst (NAC), a lean NOₓ trap (LNT), or a NOₓ storage/reduction catalyst (NSRC), disposed upstream of the SCR catalyst, e.g., a SCR catalyst of the present invention disposed on a wall-flow filter. NAC components useful in the present invention include a catalyst combination of a basic material (such as alkali metal, alkaline earth metal or a rare earth metal, including oxides of alkali metals, oxides of alkaline earth metals, and combinations thereof), and a precious metal (such as platinum), and optionally a reduction catalyst component, such as rhodium. Specific types of basic material useful in the NAC include cesium oxide, potassium oxide, magnesium oxide, sodium oxide, calcium oxide, strontium oxide, barium oxide, and combinations thereof. The precious metal is preferably present at about 10 to about 200 g/ft³, such as 20 to 60 g/ft³. Alternatively, the precious metal of the catalyst is characterized by the average concentration which may be from about 40 to about 100 grams/ft³.

Under certain conditions, during the periodically rich regeneration events, NH₃ may be generated over a NOₓ adsorber catalyst. The SCR catalyst downstream of the NOₓ adsorber catalyst may improve the overall system NOₓ reduction efficiency. In the combined system, the SCR catalyst is capable of storing the released NH₃ from the NAC catalyst during rich regeneration events and utilizes the stored NH₃ to selectively reduce some or all of the NOₓ that slips through the NAC catalyst during the normal lean operation conditions.

The method for treating exhaust gas as described herein can be performed on an exhaust gas derived from a combustion process, such as from an internal combustion engine (whether mobile or stationary), a gas turbine and coal or oil fired power plants. The method may also be used to treat gas from industrial processes such as refining, from refinery heaters and boilers, furnaces, the chemical processing industry, coke ovens, municipal waste plants and incinerators, etc. In a particular embodiment, the method is used for treating exhaust gas from a vehicular lean burn internal combustion engine, such as a diesel engine, a lean-burn gasoline engine or an engine powered by liquid petroleum gas or natural gas.

Provided is a system for treating exhaust gas generated by combustion process, such as from an internal combustion engine (whether mobile or stationary), a gas turbine, coal or oil fired power plants, and the like. Such systems include a catalytic article comprising the copper-promoted AFX zeolite described herein and at least one additional component for treating the exhaust gas, wherein the catalytic article and at least one additional component are designed to function as a coherent unit.

In certain embodiments, the system comprises a catalytic article comprising the copper-promoted AFX zeolite described herein, a conduit for directing a flowing exhaust gas, a source of nitrogenous reductant disposed upstream of the catalytic article. The system can include a controller for the metering the nitrogenous reductant into the flowing exhaust gas only when it is determined that the zeolite catalyst is capable of catalyzing NOₓ reduction at or above a desired efficiency, such as at above 100 °C, above 150 °C or above 175 °C. The metering of the nitrogenous reductant can be arranged such that 60% to 200% of theoretical ammonia is present in exhaust gas entering the SCR catalyst calculated at 1:1 NH₃/NO and 4:3 NH₃/NO₂.

In another embodiment, the system comprises an oxidation catalyst (e.g., a diesel oxidation catalyst (DOC)) for oxidizing nitrogen monoxide in the exhaust gas to nitrogen dioxide can be located upstream of a point of metering the nitrogenous reductant into the exhaust gas. In one embodiment, the oxidation catalyst is adapted to yield a gas stream entering the SCR zeolite catalyst having a ratio of NO to NO₂ of from about 4:1 to about 1:3 by volume, e.g. at an exhaust gas temperature at oxidation catalyst inlet of 250 °C to 450 °C. The oxidation catalyst can include at least one platinum group metal (or some combination of these), such as platinum, palladium, or rhodium, coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

In a further embodiment, a suitable filter substrate is located between the oxidation catalyst and the SCR catalyst. Filter substrates can be selected from any of those mentioned above, e.g. wall flow filters. Where the filter is catalyzed, e.g. with an oxidation catalyst of the kind discussed above, preferably the point of metering nitrogenous reductant is located between the filter and the zeolite catalyst. Alternatively, if the filter is un-catalyzed, the means for metering nitrogenous reductant can be located between the oxidation catalyst and the filter.

### EXAMPLES

### Example 1: Preparation of high SAR AFX zeolite.

Sodium silicate (silica source) and zeolite Y (alumina source) were reacted in the presence of 1,3-Bis(1-adamantyl) imidazolium hydroxide (organic templating agent) at about 145 °C for 7 - 10 days. The resulting crystalline material was separated from the mother liquor, and then washed and dried. Analysis confirmed that the product contained high purity AFX zeolite having a SAR of about 22.

### Example 2: Catalytic Performance

A copper promoted AFX zeolite having a SAR of 22 was hydrothermally aged at 800 °C for 5 hours. For comparison, a sample of conventional AFX zeolite having a SAR of 8 was loaded with a similar amount of copper and then hydrothermally aged at 800 °C for 5 hours under similar conditions.

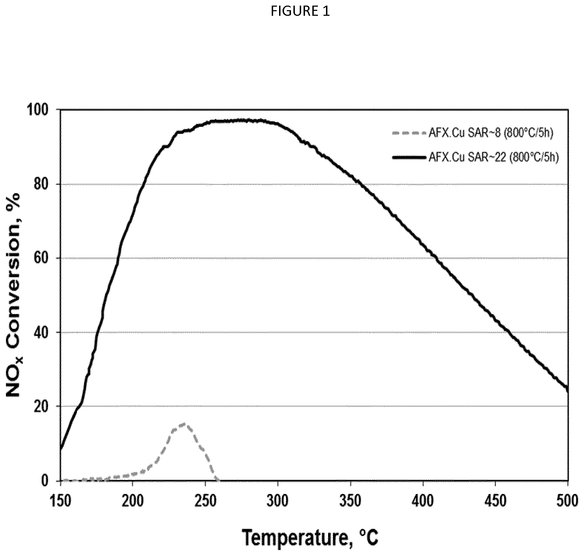

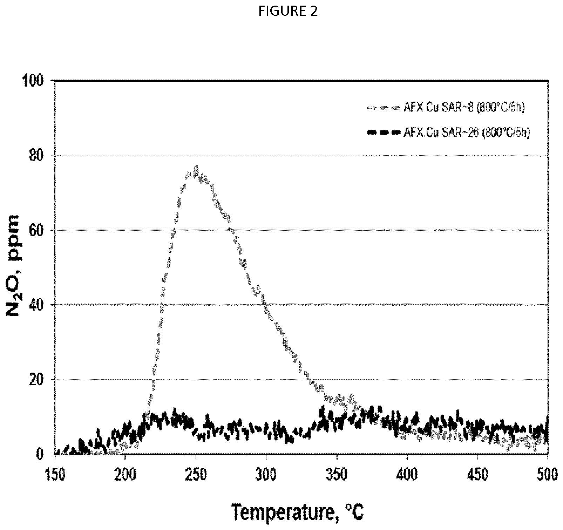

The sample and comparative sample were exposed to a simulated diesel exhaust gas stream under similar conditions and tested for their respective performance in NOₓ conversion and N₂O byproduct generation. As shown in Figures 1 and 2, the high SAR Cu/AFX catalyst had superior NOₓ conversion relative to the conventional AFX material. In addition, the high SAR Cu/AFX catalyst had lower N₂O byproduct generation relative to the conventional AFX material. These surprising and unexpected results demonstrate that the high SAR AFX catalyst of the present invention is superior to a conventional AFX zeolite for SCR reactions.

## Claims

1. A catalyst for treating exhaust gas comprising a Cu-loaded zeolite having an AFX framework and a silica-to-alumina mol ratio (SAR) of 15 to 50, wherein the primary crystalline phase of the zeolite comprises at least 90 weight percent AFX framework, and wherein the zeolite has a (Cu+A_{M}):Al molar ratio of not more than 0.6., wherein (Cu+A_{M}):Al defines the relative cumulative molar amount of promoter metal Cu and alkali and/or alkaline earth metals (A_{M}) present in the zeolite material relative to the molar amount of framework aluminum in the zeolite.

2. The catalyst of claim 1, wherein the Cu-loaded zeolite contains 0.1 to 8 weight percent Cu.

3. The catalyst of claim 2, wherein the Cu-loaded zeolite contains 0.5 to 5 weight percent Cu.

4. The catalyst of claim 3, wherein said Cu is non-framework copper.

5. The catalyst of claim 1, wherein the SAR is 20 to 40.

6. The catalyst of claim 1, wherein the SAR is 20 to 30.

7. The catalyst of claim 1, wherein the zeolite has a mean crystal size of 0.1 to 15 microns, as determined by a microscopy method such as SEM or TEM according to the description.

8. A catalyst of claim 1, wherein said catalyst extruded into a honeycomb monolith.

9. A catalyst washcoat comprising a Cu-loaded zeolite having an AFX framework and a silica-to-alumina mol ratio (SAR) of 15 to about 50 and one or more binders selected from alumina, silica, ceria, zirconia, titania, and combinations thereof, wherein the primary crystalline phase of the zeolite comprises at least 90 weight percent AFX framework, and wherein the zeolite has a (Cu+A_{M}):Al molar ratio of not more than 0.6., wherein (Cu+A_{M}):Al defines the relative cumulative molar amount of promoter metal Cu and alkali and/or alkaline earth metals (A_{M}) present in the zeolite material relative to the molar amount of framework aluminum in the zeolite.

10. An exhaust gas treatment system comprising:
a. a substrate selected from flow-through honeycomb monoliths and wall-flow filters; and
b. a catalyst coating disposed on and/or within the substrate, wherein the catalyst coating comprises a catalyst composition according to claim 1.

11. The exhaust gas treatment system of claim 10, wherein the system further comprises an oxidation catalyst downstream of at least a portion of the catalyst coating.

12. The exhaust gas treatment system of claim 10, wherein the system further comprises a NOₓ trapping or NOₓ absorbing catalyst disposed upstream of the catalyst coating.

13. A method for treating an exhaust gas comprising the step of contacting a mixture of an SCR reductant and a NOₓ containing exhaust gas with a catalyst comprising a Cu-loaded zeolite having an AFX framework and a silica-to-alumina mol ratio (SAR) of 15 to 50, wherein the primary crystalline phase of the zeolite comprises at least 90 weight percent AFX framework, and wherein the zeolite has an (Cu+A_{M}):Al molar ratio of not more than 0.6, and wherein said contacting reduces at least a portion the NOₓ into nitrogen and water, wherein (Cu+A_{M}):Al defines the relative cumulative molar amount of promoter metal Cu and alkali and/or alkaline earth metals (A_{M}) present in the zeolite material relative to the molar amount of framework aluminum in the zeolite.

## Patentansprüche

1. Katalysator zum Behandeln von Abgas, umfassend einen Cu-beladenen Zeolithen, der ein AFX-Gerüst und ein Siliciumdioxid-zu-Aluminiumoxid-Molverhältnis (SAR) von 15 zu 50 aufweist, wobei die primäre kristalline Phase des Zeoliths mindestens zu 90 Gewichtsprozent das AFX-Gerüst umfasst, und wobei der Zeolith ein (Cu+A_{M}):Al-Molverhältnis von nicht mehr als 0,6 aufweist, wobei (Cu+A_{M}):Al die relative kumulative Molmenge von Promotormetall Cu und Alkali- und/oder Erdalkalimetalle (A_{M}) definiert, die in dem Zeolithmaterial relativ zu der Molmenge des Gerüstaluminiums in dem Zeolith vorhanden sind.

2. Katalysator nach Anspruch 1, wobei der Cu-beladene Zeolith zu 0,1 bis 8 Gewichtsprozent Cu enthält.

3. Katalysator nach Anspruch 2, wobei der Cu-beladene Zeolith zu 0,5 bis 5 Gewichtsprozent Cu enthält.

4. Katalysator nach Anspruch 3, wobei das Cu kein Gerüstkupfer ist.

5. Verfahren nach Anspruch 1, wobei das SAR 20 bis 40 beträgt.

6. Verfahren nach Anspruch 1, wobei das SAR 20 bis 30 beträgt.

7. Katalysator nach Anspruch 1, wobei der Zeolith eine mittlere Kristallgröße von 0,1 bis 15 Mikrometer aufweist, bestimmt durch ein Mikroskopieverfahren wie SEM oder TEM gemäß der Beschreibung.

8. Katalysator nach Anspruch 1, wobei der Katalysator zu einem Wabenmonolith extrudiert ist.

9. Katalysator-Washcoat, umfassend einen Cu-beladenen Zeolithen, der ein AFX-Gerüst und ein Siliciumdioxid-zu-Aluminiumoxid-Molverhältnis (SAR) von 15 bis etwa 50 aufweist, und ein oder mehrere Bindemittel, ausgewählt aus Aluminiumoxid, Siliciumdioxid, Ceroxid, Zirkonoxid, Titanoxid und Kombinationen davon, wobei die primäre kristalline Phase des Zeoliths mindestens zu 90 Gewichtsprozent das AFX-Gerüst umfasst, und wobei der Zeolith ein (Cu+A_{M}):Al-Molverhältnis von nicht mehr als 0,6 aufweist, wobei (Cu+A_{M}):Al die relative kumulative Molmenge von Promotormetall Cu und Alkali- und/oder Erdalkalimetalle (A_{M}) definiert, die in dem Zeolithmaterial relativ zu der Molmenge des Gerüstaluminiums in dem Zeolith vorhanden sind.

10. Abgasbehandlungssystem, umfassend:
a. ein Substrat, das aus Durchfluss-Wabenmonolithen und Wandstromfiltern ausgewählt ist; und
b. eine Katalysatorbeschichtung, die auf und/oder in dem Substrat angeordnet ist, wobei die Katalysatorbeschichtung eine Katalysatorzusammensetzung nach Anspruch 1 umfasst.

11. Abgasbehandlungssystem nach Anspruch 10, wobei das System außerdem einen Oxidationskatalysator stromabwärts von mindestens einem Anteil der Katalysatorbeschichtung umfasst.

12. Abgasbehandlungssystem nach Anspruch 10, wobei das System ferner einen NOx-fangenden oder NO_{X}-absorbierenden Katalysator umfasst, der stromaufwärts von der Katalysatorbeschichtung angeordnet ist.

13. Verfahren zum Behandeln eines Abgases, umfassend den Schritt des Inberührungbringens einer Mischung von einem SCR-Reduktionsmittel und einem NOₓ-haltigen Abgas mit einem Katalysator, umfassend einen Cu-beladenen Zeolithen, der ein AFX-Gerüst und ein Siliciumdioxid-zu-Aluminiumoxid-Molverhältnis (SAR) von 15 bis 50 aufweist, wobei die primäre kristalline Phase des Zeoliths mindestens zu 90 Gewichtsprozent das AFX-Gerüst umfasst, und wobei der Zeolith ein (Cu+A_{M}):Al-Molverhältnis von nicht mehr als 0,6 aufweist, und wobei das Inberührungbringen mindestens einen Anteil des NOₓ in Stickstoff und Wasser reduziert, wobei (Cu+AM):Al die relative kumulative Molmenge von Promotormetall Cu und Alkali- und/oder Erdalkalimetalle (AM) definiert, die in dem Zeolithmaterial relativ zu der Molmenge des Gerüstaluminiums in dem Zeolith vorhanden sind.

## Revendications

1. Catalyseur destiné au traitement de gaz d'échappement comprenant une zéolite chargée en Cu ayant une structure AFX et un rapport molaire silice sur alumine (SAR) de 15 à 50, dans lequel la phase cristalline primaire de la zéolite comprend au moins 90 % en poids de structure AFX, et dans lequel la zéolite a un rapport molaire (Cu + A_{M}):Al ne dépassant pas 0,6, dans lequel (Cu + A_{M}):Al définit la quantité molaire cumulative relative du métal promoteur Cu et des métaux alcalins et/ou alcalino-terreux (A_{M}) présents dans le matériau à base de zéolite par rapport à la quantité molaire d'aluminium de la structure dans la zéolite.

2. Catalyseur selon la revendication 1, dans lequel la zéolite chargée en Cu contient de 0,1 à 8 % en poids de Cu.

3. Catalyseur selon la revendication 2, dans lequel la zéolite chargée en Cu contient de 0,5 à 5 % en poids de Cu.

4. Catalyseur selon la revendication 3, dans lequel ledit Cu est du cuivre non structurel.

5. Procédé selon la revendication 1, dans lequel le SAR est de 20 à 40.

6. Procédé selon la revendication 1, dans lequel le SAR est de 20 à 30.

7. Catalyseur de la revendication 1, dans lequel la zéolite a une taille moyenne de cristaux de 0,1 à 15 microns, telle que déterminée par un procédé de microscopie tel que SEM ou TEM selon la description.

8. Catalyseur selon la revendication 1, dans lequel ledit catalyseur est extrudé sous forme de monolithe en nid d'abeille.

9. Couche d'imprégnation de catalyseur comprenant une zéolite chargée en Cu ayant une structure AFX et un rapport molaire silice sur alumine (SAR) de 15 à environ 50 et un ou plusieurs liants choisis parmi alumine, silice, céria, zircone, titane et leurs combinaisons, dans laquelle la phase cristalline primaire de la zéolite comprend au moins 90 % en poids de structure AFX, et dans laquelle la zéolite a un rapport molaire (Cu + A_{M}):Al ne dépassant pas 0,6, dans laquelle (Cu + A_{M}):Al définit la quantité molaire cumulative relative du métal promoteur Cu et des métaux alcalins et/ou alcalino-terreux (A_{M}) présents dans le matériau à base de zéolite par rapport à la quantité molaire d'aluminium de structure dans la zéolite.

10. Système de traitement de gaz d'échappement comprenant :
a. un substrat choisi parmi les monolithes en nid d'abeille à écoulement continu et les filtres à écoulement continu ; et
b. un revêtement de catalyseur disposé sur et/ou dans le substrat, dans lequel le revêtement de catalyseur comprend une composition de catalyseur selon la revendication 1.

11. Système de traitement de gaz d'échappement selon la revendication 10, dans lequel le système comprend en outre un catalyseur d'oxydation en aval d'au moins une partie du revêtement de catalyseur.

12. Système de traitement de gaz d'échappement selon la revendication 10, dans lequel le système comprend en outre un catalyseur de piégeage des NO_{X} ou d'absorption des NO_{X} disposé en amont du revêtement de catalyseur.

13. Procédé de traitement d'un gaz d'échappement comprenant l'étape consistant à mettre en contact un mélange d'un réducteur SCR et d'un gaz d'échappement contenant des NO_{X} avec un catalyseur comprenant une zéolite chargée en Cu ayant une structure AFX et un rapport molaire silice sur alumine (SAR) de 15 à 50, dans lequel la phase cristalline primaire de la zéolite comprend au moins 90 % en poids de structure AFX, et dans lequel la zéolite a un rapport molaire (Cu + A_{M}):Al ne dépassant pas 0,6, et dans lequel ladite mise en contact réduit au moins une partie des NO_{X} en azote et en eau, dans lequel (Cu + A_{M}):Al définit la quantité molaire cumulative relative du métal promoteur Cu et des métaux alcalins et/ou alcalino-terreux (A_{M}) présents dans le matériau à base de zéolite par rapport à la quantité molaire d'aluminium de structure dans la zéolithe.
